# EUROPEAN PATENT APPLICATION

(11) **EP 4 148 625 A1**
(43) Date of publication of application: **15.03.2023**
(21) Application number: 21818210.3
(22) Date of filing: 03.06.2021
(51) Int. Cl.: G06N 3/04, G06N 3/08, G06T 7/00

(54) **METHOD AND SYSTEM FOR TRAINING NEURAL NETWORK FOR DETERMINING SEVERITY**

(30) Priority: 05.06.2020 KR 20200068641
(71) Applicant: Deep Bio Inc., Seoul 08380 (KR)
(72) Inventor: KIM, Sun Woo, Seongnam-si, Gyeonggi-do 13599 (KR); KWAK, Tae Yeong, Seoul 05119 (KR); CHANG, Hye Yoon, Seoul 03303 (KR); MUN, Ye Chan, Seoul 08393 (KR)
(74) Representative: Flügel Preissner Schober Seidel
(86) International application number: PCT/KR2021/006967
(87) International publication number: WO 2021/246811

(57) **Abstract**

The present disclosure discloses a method and system for training a neural network for determining severity, and more particularly, a method and system which may effectively learn a neural network performing patch unit severity diagnosis using a pathological slide image to which a severity indication (label) is given.

## Description

### TECHNICAL FIELD

The present disclosure relates to a method and system for training a neural network for determining severity, and more particularly, a method and system which may effectively learn a neural network performing patch unit severity diagnosis using a pathological slide image to which a severity indication (label) is given.

### BACKGROUND ART

Recently, a try to automate work such as recognition or classification of images by a computer system due to developments of mechanical training is actively made. In particular, a try to automate various classification or determination which is performed by a human using the neural network (e.g., a deep training method which uses Convolution Neural Network(CNN)) which is a type of mechanical training is made. To perform diagnosis which reads a biometric image (e.g., a biological tissue slide of a patient) using deep training which uses the neural network(e.g., CNN)and determines a status or a symptom about a specific disease may be a representative example.

Based on analysis of a pathological Whole-Slide-Image such as a biological tissue image, severity diagnostic apparatus which automatically determines severity of diseases(for example, a Gleason score of prostate cancer, a Gleason grade group thereof, a grade of bladder cancer or breast cancer) enhances productivity of pathological diagnosis work such as prognosis determination of a patient.

The severity diagnostic apparatus using a neural network may be developed in largely two ways as follows. A first way is a way of developing severity diagnostic apparatus only with severity information of an End-to-End slide unit (a way of slide unit severity diagnosis). This is a way of diagnosing severity in a slide unit by extracting features of a unit area and utilizing integrated information. The way of severity diagnosis of a slide unit has an advantage of training the neural network only with severity information of a slide unit without indication information of severity of an area unit, but has a disadvantage that explanation power about a diagnosis result of a slide unit is weak and accuracy is low. A second way is a way of developing severity diagnostic apparatus of a patch (an area to which a slide is segmented in a certain size) unit and severity diagnostic apparatus of a slide unit, respectively. This is a way of integrating severity diagnosis results of an area unit and diagnosing severity of a slide unit. In this way, explanation power about a diagnosis result of a slide unit increases but there is a disadvantage that indication information of severity of a patch unit is necessarily needed for training the neural network.

Meanwhile, in general, information about a lesion area is not given to a pathological slide where diagnosis is performed by a doctor, but information about whether there is a lesion may be given thereto. One of methods of training a detector which detects a lesion area only with information about whether there is a lesion with respect to a pathological slide is a training technique referred to as Multiple Instance Training.

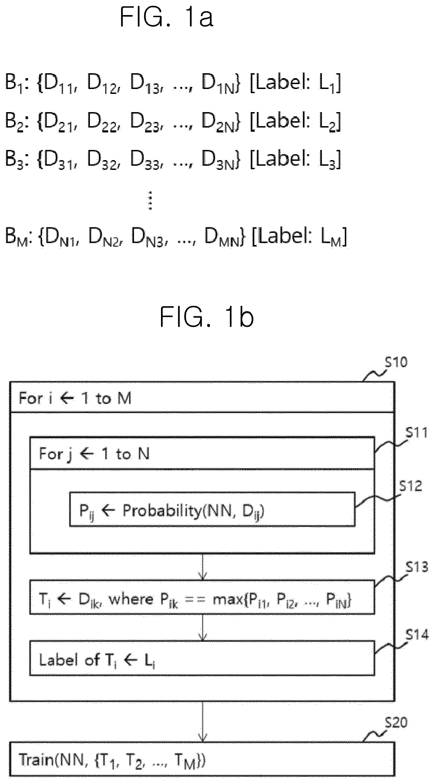

Meanwhile, referring to FIGS. 1A and 1B, multiple instance training which is one of background arts of the present disclosure is described.

Differently from individual instance training which uses one instance as a training unit, multiple instance training considers a bag which is a set of instances as a training unit. Accordingly, the individual instance training labels an instance, otherwise the multiple instance training label a bag other than the instance. The multiple instance training is similar with the individual instance training except an aspect of the training unit but additionally has the following limitations. When performing binary classification, it is assumed that if a bag is positive, at least one or more of instances which are present in the bag is positive, and if the bag is negative, all instances in the bag are negative.

Due to these features, the multiple instance training may apply to a field which diagnoses a lesion from a pathological whole slide image using, for example, a neural network. This is because in order to learn the neural network for diagnosing the lesion, image patches into which the image is segmented in a certain size other than the whole slide image are used as the training data but information (i.e., a label) about whether there is a lesion is given to the whole slide image other than a patch unit.

FIG. 1A is a view illustrating an example of training data used in the multiple instance training. FIG. 1 illustrates M bags (B₁ to B_{M}) including N data instances, respectively. In FIG. 1, the bag Bᵢ is labeled with Lᵢ (here, i is any integer where 1<=i<=M), a data instance Dᵢⱼ presents a j^{th} instance included in the bag Bᵢ(here, j is any integer where 1<=j<=N).

FIG. 1B is a view illustrating pseudo code which presents an example of a process of training a neural network(NN) via a multiple instance training technique. FIG. 1B presents a process of training 1 epoch of training data, wherein many epochs of training may be proceeded in a real training process. FIG. 1B assumes that training is proceeded with training data shown in FIG. 1A.

Referring to FIG. 1B, in the multiple instance training, a process of extracting training data instances(T₁ to T_{M}) from each bag(B₁ to B_{M}) is performed at first(S10), and then a process of training the neural network(NN) with the extracted training data instances is performed(S20).

When more specifically explaining the step(S10), the following process is performed for the bag(Bᵢ)(here, i is any integer where 1<=i<=M).

Each data instance within the bag(Bᵢ) of the neural network(NN) where training is proceeded at present is inputted, and probabilities where the relevant instance is positive(for example, the lesion is present) are calculated(S11, S12).

A data instance(Dᵢₖ) where positive probabilities of the relevant data instance of all data instances within the bag(Bᵢ) are the biggest is determined as the training data instance(Tᵢ) (S13), and a label of the training data instance (Tᵢ) becomes the label given to the bag (Bᵢ)(S14).

Since the conventional multiple instance training described above extracts one instance for one bag and uses it for training, there is a problem that many bags are needed in order to enhance performance of the neural network. For example, in order to use the existing multiple instance training in the neural network for detecting the lesion, many whole slide images to which indications about whether there is a lesion are given are needed.

Also, as previously described, since in the multiple instance training, the neural network before completing training is used in a process of extracting a training data instance, if many data instances are extracted from one bag, there is a problem that probabilities where a wrong instance is extracted become high.

### DISCLOSURE OF INVENTION

### TECHNICAL PROBLEM

In order to overcome problems of the conventional way for developing severity diagnostic apparatus using a neural network, i) if the neural network is learned only with severity information of a slide unit, diagnosis accuracy is lowered, and ii) indication information of severity of a patch unit is necessarily needed for training the neural network performing severity diagnosis of a patch unit, the technical problem to be solved by the present disclosure is to provide a method and system which may effectively learn the neural network performing severity diagnosis of a patch unit using a pathological slide image to which a severity indication(label) is given.

### TECHNICAL SOLUTION

According to an aspect of the present disclosure, provided is a neural network training system for severity determination including: a neural network for determining a lesion which is a neural network pre-trained to if each patch into which a pathological slide image is segmented in a certain size is inputted, output a determination result about whether there is a lesion due to a certain disease in the inputted patch; a storage module configured to store a neural network for determining severity to determine severity of the disease based on the pathological slide image; a neural network training module for determining severity configured to learn a neural network for determining severity based on a given image for training; and a control module configured to control that the neural network training module for determining severity learns the neural network for determining severity based on the pathological slide image, for each of a plurality pathological slide images which are labeled with severity of the disease, respectively, wherein the neural network training module for determining severity includes a feature extraction module configured to extract features generated in a process in which the neural network for determining a lesion receiving the patch outputs a determination result about the patch, for each of a plurality of patches segmented in a unit size; a feature map generation module which generates a feature map corresponding to the image for training, based on features corresponding to each of the plurality of patches forming the image for training; a labeling module configured to label the feature map corresponding to the image for training with a severity label of the image for training; and a training module configured to input the feature map corresponding to the image for training to the neural network for determining severity and learn the neural network for determining severity.

According to an example, the neural network for determining a lesion is pre-trained by a neural network training method for determining a lesion performed by a neural network training system for determining a lesion including an auto-encoder configured to if an image having a unit size is inputted, determine whether the inputted image is in a first state where there is not a lesion due to the disease or a second state where there is a lesion due to the disease, wherein the neural network training method for determining a lesion may include a step of extracting a patch for pre-training which is part of patches forming a pathological slide image for pre-training, for each of a plurality of pathological slide images for pre-training labeled with any one of the first state or the second state, and a step of training the neural network for determining a lesion based on the patch for pre-training corresponding to each of a plurality of images for training, wherein the step of extracting a patch for pre-training which is part of patches forming the pathological slide image for pre-training may include a step of inputting each patch for pre-training forming the pathological slide image for pre-training to the neural network for determining a lesion in training, and calculating probabilities for each patch forming the pathological slide image for pre-training; and a step of determining part of each patch forming the pathological slide image for pre-training as a patch for pre-training based on probabilities for each patch forming the pathological slide image for pre-training and a determination result of the auto-encoder with respect to at least part of each patch forming the pathological slide image for pre-training.

In an example, the auto-encoder is pre-trained only with a normal patch which has a unit size and does not include a lesion due to a disease, wherein the step of determining part of each patch forming the pathological slide image for pre-training as a patch for pre-training based on probabilities for each patch forming the pathological slide image for pre-training and the determination result of the auto-encoder with respect to at least part of each patch forming the pathological slide image for pre-training may include a step of if the pathological slide image for pre-training is labeled with the first state, inputting patches to the auto-encoder in the order from a patch which has the highest probabilities where it is in the second state to a patch which has the lowest probabilities where it is in the second state and determining top part of patches determined by the auto-encoder as being in the first state, as a patch for training corresponding to the image for training; and a step of if the pathological slide image for pre-training is labeled with the second state, inputting patches to the auto-encoder in the order from a patch which has the highest probabilities where it is in the second state to a patch which has the lowest probabilities where it is in the second state and determining top part of patches determined by the auto-encoder as being in the second state, as a patch for training corresponding to the image for training.

According to one of the other aspects of the present disclosure, provided is a neural network training method for determining severity performed in a computing system which includes: a neural network for determining a lesion which is a neural network pre-trained to if each patch into which the pathological slide image is segmented in a certain unit size is inputted, output a determination result about whether there is a lesion due to a certain disease in the inputted patch; and a neural network for determining severity to determine severity of the disease based on the pathological slide image, wherein the neural network training method for determining severity includes: a step of obtaining a plurality of pathological slide images labeled with severity of the disease, respectively; and a step of training the neural network for determining severity based on the pathological slide image, for each of a plurality of pathological slide images, wherein the step of training the neural network for determining severity based on the pathological slide images includes: a step of extracting features generated in a process that the neural network for determining a lesion receiving the patch outputs a determination result about the patch, for each of a plurality of patches into which the pathological slide image is segmented in a unit size; a step of generating a feature map corresponding to the pathological slide based on the feature corresponding to each of the plurality of patches forming the pathological slide image; a step of labeling the feature map corresponding to the pathological slide with a severity label of the pathological slide; and a step of inputting the feature map corresponding to the pathological slide to the neural network for determining severity and training the neural network for determining severity.

According to an example, the neural network for determining a lesion is pre-trained by a neural network training method for determining a lesion performed by a neural network training system for determining a lesion including an auto-encoder configured to if an image having a unit size is inputted, determine whether the inputted image is in a first state where there is not a lesion due to the disease or a second state where there is a lesion due to the disease, wherein the neural network training method for determining a lesion may include a step of extracting a patch for pre-training which is part of patches forming a pathological slide image for pre-training, for each of a plurality of pathological slide images for pre-training labeled with any one of the first state or the second state, and a step of training the neural network for determining a lesion based on the patch for pre-training corresponding to each of a plurality of images for training, wherein the step of extracting a patch for pre-training which is part of patches forming the pathological slide image for pre-training may include a step of inputting each patch for pre-training forming the pathological slide image for pre-training to the neural network for determining a lesion in training, and calculating probabilities for each patch forming the pathological slide image for pre-training; and a step of determining part of each patch forming the pathological slide image for pre-training as a patch for pre-training based on probabilities for each patch forming the pathological slide image for pre-training and a determination result of the auto-encoder with respect to at least part of each patch forming the pathological slide image for pre-training.

In an example, the auto-encoder is pre-trained only with a normal patch which has a unit size and does not include a lesion due to a disease, wherein the step of determining part of each patch forming the pathological slide image for pre-training as a patch for pre-training based on probabilities for each patch forming the pathological slide image for pre-training and the determination result of the auto-encoder with respect to at least part of each patch forming the pathological slide image for pre-training may include a step of if the pathological slide image for pre-training is labeled with the first state, inputting patches to the auto-encoder in the order from a patch which has the highest probabilities where it is in the second state to a patch which has the lowest probabilities where it is in the second state and determining top part of patches determined by the auto-encoder as being in the first state, as a patch for training corresponding to the image for training; and a step of if the pathological slide image for pre-training is labeled with the second state, inputting patches to the auto-encoder in the order from a patch which has the highest probabilities where it is in the second state to a patch which has the lowest probabilities where it is in the second state and determining top part of patches determined by the auto-encoder as being in the second state, as a patch for training corresponding to the image for training.

According to one of the other aspects of the present disclosure, provided is a computer program recorded on a medium installed in a data processing device and for performing the above method.

According to one of the other aspects of the present disclosure, provided is a computer readable recording medium on which a computer program for performing the above method is recorded.

According to one of the other aspects of the present disclosure, the computing system includes a processor and a memory, wherein provided is the computing system configured such that if the memory is performed by the processor, the computing system performs the above method.

According to one of the other aspects of the present disclosure, provided is a severity diagnosis system using a neural network which includes: a neural network for determining a lesion; a neural network storage module configured to store a neural network for determining severity learned by a neural network training method for determining severity; a diagnosis feature extraction module configured to extract features generated in a process that the neural network for determining a lesion receiving a diagnosis patch outputs a determination result about the diagnosis patch, for each of a plurality of diagnosis patches into which a determination target pathological slide image is segmented; a severity output module configured to input a feature map generated based on a feature corresponding to each of the plurality of diagnosis patches forming the determination target pathological slide image to the neural network for determining severity and output a diagnosis result by the neural network for determining severity.

In an example, it further includes a lesion area output module configured to output a heat map of the determination target image, based on a determination result of each of the plurality of diagnosis patches obtained by the neural network for determining a lesion receiving the plurality diagnosis patches.

### ADVANTAGEOUS EFFECTS

According to the technical spirit of the present disclosure, provided are a method and a system which may effectively learn a neural network performing severity diagnosis of a patch unit using a pathological slide image into which a severity indication(label) is given.

Also, there is an effect of enhancing performance of a neural network even with little training data using an auto-encoder and a multiple instance training technique.

### BRIEF DESCRIPTION OF THE DRAWINGS

To more fully understand drawings cited in the detailed description of the present disclosure, brief description of each drawing is provided.
FIG. 1A is a view illustrating an example of training data used in the multiple instance training.
FIG. 1B is a view illustrating pseudo code which presents an example of a process of training a neural network via a multiple instance training technique.
FIG. 2 is a view for describing a schematic flow of a training method of a neural network for determining severity according to the technical spirit of the present disclosure.
FIG. 3 is a view schematically illustrating an example of an operation method of slide unit diagnostic apparatus including the neural network for determining severity learned by a training method of the neural network for determining severity according to the technical spirit of the present disclosure.
FIG. 4 is a block diagram illustrating schematic configurations of a training system of the neural network for determining severity according to an example of the present disclosure.
FIG. 5 is a block diagram schematically illustrating configurations of a neural network training module for determining severity included in the training system of the neural network for determining severity according to an example of the present disclosure.
FIG. 6 is a flow chart illustrating an example of a training method of a neural network for determining severity according to an example of the present disclosure.
FIG. 7 is a view illustrating schematic configurations of a determination system including the neural network for determining severity where training is completed.
FIG. 8 is a view illustrating schematic configurations of a neural network training system for determining a lesion to perform a method of training the neural network for determining a lesion according to an example of the present disclosure.
FIG. 9 is a view schematically illustrating a structure of an auto-encoder used in the neural network training method for determining a lesion.
FIG. 10 is a view illustrating an example of a method by which the neural network training system for determining a lesion extracts data instances for training according to an example of the present disclosure.
FIG. 11 is a view illustrating an example of a specific process of the step S220 of FIG. 10.
FIG. 12 is a view illustrating an example of a specific process of the step S221 of FIG. 11.

### BEST MODE FOR CARRYING OUT THE INVENTION

Various transformations applies to the present disclosure and there may be various examples, so that specific examples are exemplified in drawings and are specifically described in the detailed description. However, the above is not intended to limit a specific exemplary form to the present disclosure and should be understood as including all of transformations, equivalents, and substitutes included in the spirit and the technical range of the present disclosure. When describing the present disclosure, if it is determined that the detailed description of the disclosed relevant technologies may make the gist of the present disclosure vague, the detailed description thereof is omitted.

Terms such as first and second may be used for explaining various components, but the components should not be limited by the terms. The terms are only used for a purpose of distinguishing one component from another component.

Terms used in the present application is only used for explaining a specific example and is not intended to limit the present disclosure. A singular expression includes a plural expression if there is no definitely different meaning in the context.

In specification, it is to be understood that the term such as "include" or "have" is to indicate that features, numbers, steps, operations, components, parts, or combinations thereof described in the specification are present and does not priorly exclude possibilities where one or more other features, numbers, steps, operations, components, parts, or combinations thereof may be present or be added.

Also, in the specification, if any one component 'transfers' data to another component, it means that the component may directly transfer the data to another component and may also transfer the data to another component via at least one other component. On the contrary, if any one component 'directly transfers' data to another component, it means that the data is transferred from one component to another component without the other component.

Hereinafter, referring to the attached drawings, the present disclosure is specifically described focusing on examples of the present disclosure. The same reference numeral presented in each drawing indicates the same component.

The neural network of the specification may include a multilayer perceptron model and may mean a set of information expressing a series of design considerations, which define an artificial neural network.

In an example, the neural network may be a convolutional neural network. The convolutional neural network may include an input layer, a plurality of hidden layers, and an output layer as well known. Each of the plurality of hidden layers may include a convolutional layer and a pooling layer(or subsampling layer).

The convolutional neural network may be defined by a function, a filter, a stride, a weight factor, and the like for defining each of these layers. Also, the output layer may be defined as a fully connected FeedForward layer.

Design considerations for each layer forming the convolutional neural network are well known. For example, the number of layers to be included in a plurality of layers, a convolutional function for defining the plurality of layers, a pooling function, and known functions with respect to each activation function may be used, and separately defined functions for realizing the technical spirit of the present disclosure may be also used.

An example of the convolutional function is a discrete convolution sum, and the like. As an example of the pooling function, max pooling, average pooling, and the like may be used. An example of the activation function may be a sigmoid function, a tangent hyperbolic(tanh) function, a rectified linear unit(ReLU) function, and the like.

If the design considerations of the above convolutional neural network are defined, the convolutional neural network where design considerations are defined may be stored in a storing device. If the convolutional neural network is learned, a weight factor corresponding to each layer may be specified.

That is, training of the convolutional neural network may mean a process in which the weight factor of each layer is determined. Further, if the convolutional neural network is learned, the learned convolutional neural network may receive input data in an input layer and may output output data via the predetermined output layer.

The neural network according to an example of the present disclosure may be defined by selecting any one design consideration or a plurality of design considerations of well-known design considerations as the above, and independent design considerations may be also defined for the neural network.

The neural network may be a classification neural network which may be used for classification of the inputted data. The classification neural network may be a neural network configured to classify a determination result about the inputted data as any one of a predetermined n results(n is an integer of 2 or more).

A neural network for determining severity learned by a training method of a neural network for determining severity according to the technical spirit of the present disclosure may be a neural network for determining severity of a certain disease from a pathological slide image. Severity may be that levels of a disease are discretely divided and may be pre-defined by a type of diseases. For example, severity may be a Gleason score of prostate cancer, a Gleason grade group thereof, a grade of bladder cancer or breast cancer according to a type of diseases.

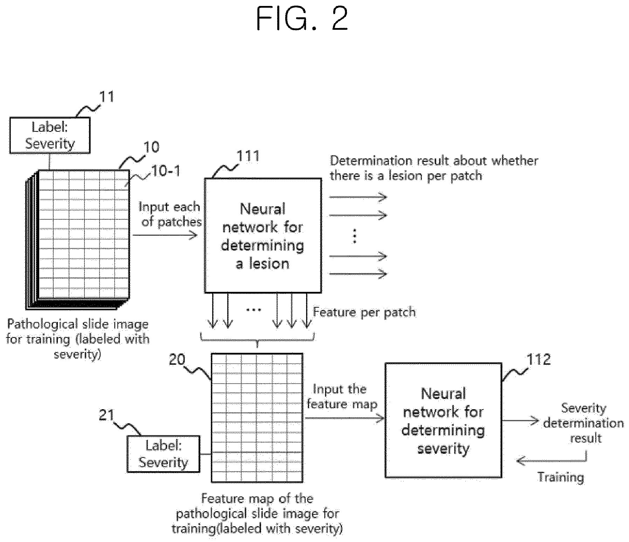

FIG. 2 is a view for describing a schematic flow of a training method of a neural network for determining severity according to the technical spirit of the present disclosure.

Referring to FIG. 2, in order to realize a training method of a neural network 112 for determining severity according to the technical spirit of the present disclosure, a pre-trained neural network 111 for determining a lesion may be needed. The neural network 111 for determining a lesion may be a neural network which if a patch(e.g., 10-1) is inputted, outputs a determination result about whether a lesion due to a certain disease is present in the inputted patch 10-1, and may be a neural network pre-trained before performing a training process about the neural network 112 for determining severity. Here, the patch(e.g., 10-1) may be part of an image where a pathological slide image(e.g., tissue slide image; 10) is segmented in a certain unit size.

As shown in FIG. 2, if the pathological slide image 10 for training is inputted in a patch unit, the neural network 111 for determining a lesion may output a determination result about whether a lesion is present for each patch.

Meanwhile, in a process that the neural network 111 for determining a lesion outputs a determination result about whether a lesion is present for each patch, features corresponding to the inputted patch within the neural network 111 for determining a lesion may be generated. Features for each patch forming the pathological slide image 10 for training are incorporated and a feature map 20 corresponding to the pathological slide image 10 for training may be generated. For example, a pathological slide 10 for training is segmented into a x row and a y column to form each patch. If a feature per patch is a z dimension, the feature map 20 may be data of a x*y*z dimension, and a relative position among the incorporated features may be the same as a relative position among patches corresponding thereto, respectively.

The feature map 20 corresponding to the pathological slide image 10 for training generated above may be labeled with a label 11 of a pathological slide image 10 for training. That is, a label 21 of the feature map 20 corresponding to the pathological slide image 10 for training may be identically set with the label 11 of the pathological slide image 10 for training.

Thereafter, the feature map 20 to which the label 21 is given may be inputted to the neural network 112 for determining severity and may be used for training the neural network 112 for determining severity.

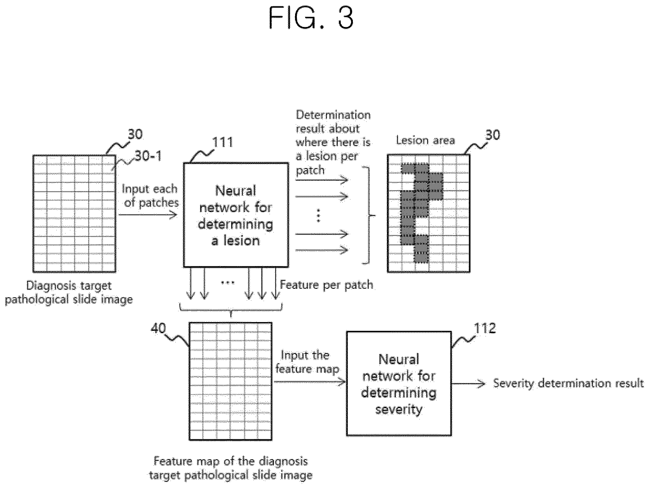

The learned neural network 112 for determining severity may applies to slide unit severity diagnostic apparatus, and FIG. 3 is a view schematically illustrating an example of an operation method of slide unit diagnostic apparatus including the neural network for determining severity learned by a training method of the neural network for determining severity according to the technical spirit of the present disclosure.

Referring to FIG. 3, if a diagnosis target pathological slide image 30 to be a diagnosis target is segmented in a patch(e.g., 30-1) unit and is inputted to the neural network 111 for determining a lesion, the neural network 111 for determining a lesion may generate a feature for each patch. The feature map 40 to which features for each patch are incorporated is inputted to the neural network 112 for determining severity, and the neural network 112 for determining severity may output a determination result of severity corresponding to the diagnosis target pathological slide image 30.

Meanwhile, slide unit severity diagnostic apparatus may output a lesion area 30 within a diagnosis target pathological slide image based on a determination result outputted by the neural network 111 for determining a lesion about whether a lesion is present for each patch.

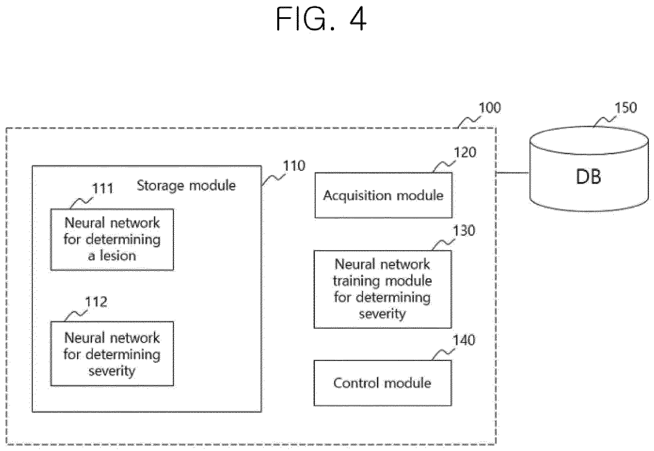

FIG. 4 is a block diagram illustrating schematic configurations of a training system of the neural network for determining severity performing a training method of the neural network for determining severity according to an example of the present disclosure.

The neural network training method according to the technical spirit of the present disclosure may be performed by a neural network training system 100 for determining severity.

The neural network training system 100 for determining severity may be a computing device. In the specification, a computing device may be a data processing device having an arithmetic operation ability and may include not only a server which is a data processing device to which a client may be connected via a network in general but also a computing device such as a personal computer or a portable terminal.

Those skilled in the art may easily infer that the neural network training system 100 for determining severity may be implemented as any one physical device but a plurality of physical devices may be organically combined as required to implement the neural network training system 100 for determining severity according to the technical spirit of the present disclosure.

Referring to FIG. 4, the neural network training system 100 for determining severity may include a storage module 110, an acquisition module 120, and a neural network training module 130 for determining severity, and a control module 140. According to an example of the present disclosure, some components of the above components may not correspond to components which are necessarily required for implementing the present disclosure. Also, according to an example, it is natural that the neural network training system 100 may include more components than the above.

The control module 140 may control a function and/or a resource of other configurations(e.g., the storage module 110, the acquisition module 120, and the neural network training module 130 for determining severity, and the like) of the neural network training system 100 for determining severity. Also, according to an example, the neural network training system 100 for determining severity may further include a database(DB) (150) for storing various information and/or data required for realizing the technical spirit of the present disclosure.

The neural network training system 100 for determining severity may mean a logical configuration having a hardware resource and/or software required for realizing the technical spirit of the present disclosure and does not necessarily mean one physical component or one device. That is, the system 100 may mean a logical combination of hardware and/or software included for realizing the technical spirit of the present disclosure, and if required, it may be installed in spaced devices one another to perform each function, so that it may be implemented as a set of logical configurations for realizing the technical spirit of the present disclosure. Also, the system 100 may mean a set of configurations, which are separately implemented according to each function or role for realizing the technical spirit of the present disclosure. For example, each of the storage module 110, the acquisition module 120, the neural network training module 130 for determining severity, and the control module 140 may be located at different physical devices from one another and may be also located at the same physical device. Also, according to an embodiment, the combination of software and/or hardware forming each of the storage module 110, the acquisition module 120, the neural network training module 130 for determining severity, and the control module 140 may be also located at different physical devices from one another, wherein configurations located at different physical devices from one another may be organically combined to implement each of the modules.

Also, a module of the specification may mean a functional and structural combination of hardware and software for driving the hardware to perform the technical spirit of the present disclosure. For example, those skilled in the art may easily infer that the module may mean a logical unit of given code and a hardware resource for performing the given code, wherein it does not mean code which is necessarily physically connected or one type of hardware.

The storage module 110 may store the neural network 111 for determining a lesion and the neural network 112 for determining severity.

The neural network 111 for determining a lesion may be a neural network configured to if a patch into which a pathological slide image is segmented in a certain unit size is inputted, output a determination result about whether a lesion due to a certain disease is present in the inputted patch. It may be a neural network pre-trained before performing a training process about the neural network 112 for determining severity. In an example, the neural network 111 for determining a lesion may be a neural network learned by a training process based on multiple instance training and an auto-encoder according to an example of the present disclosure. The training process based on the multiple instance training and the auto-encoder according to an example of the present disclosure is described later.

The neural network 112 for determining severity may be a neural network for determining severity of a certain disease from a pathological slide image. More particularly, it may be a neural network configured to in a process that the neural network 111 for determining a lesion determines each patch into which a pathological slide image is segmented in a unit size, receive a feature map where features generated by the neural network 111 for determining a lesion are incorporated and determine severity about the inputted feature map.

The acquisition module 120 may obtain a plurality of pathological slide images labeled with severity of a certain disease, respectively.

In an example, the acquisition module 120 may obtain a plurality of pathological slide images stored in the DB 150. Each pathological slide image may be a whole-slide-image. Training data stored in the DB 150 may be labeled with whether there is a lesion.

Meanwhile, according to an example, a pathological slide image obtained by the acquisition module 120 may be inputted from not the DB 150 but a user via an input means and may be also stored in a form of a file in a storing device such as HDD or SDD.

A neural network training module 130 for determining severity may make the neural network 112 for determining severity be learned based on one image for training labeled with severity of a disease.

A control module 140 may control the neural network training module 130 for determining severity to learn the neural network for determining severity based on a pathological slide image, for each of a plurality of pathological slide images labeled with severity of a disease, respectively.

Also, in an example, the control module 140 may make a training process(epoch) using the plurality of pathological slide images as training data be repetitively performed several times.

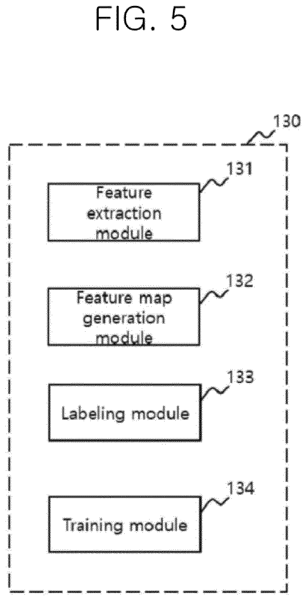

FIG. 5 is a block diagram schematically illustrating configurations of a neural network training module 130 for determining severity of a neural network training system 100 for determining severity according to an example of the present disclosure.

Referring to FIG. 5, the neural network training module 130 for determining severity may include a feature extraction module 131, a feature map generation module 132, a labeling module 133, and a training module 134.

The feature extraction module 131 may extract a feature generated in a process that the neural network 111 for determining a lesion receiving a patch outputs a determination result about the patch, for each of a plurality of patches into which an image for training is segmented in a unit size.

That is, the feature extraction module 131 may segment the inputted image into patches having a unit size, may input each segmented patch to the neural network 111 for determining a lesion, and may make the neural network 111 for determining a lesion perform a determination about the inputted patch. Here, the feature extraction module 131 may extract features generated in a process that the neural network 111 for determining a lesion perform a determination about the inputted patch.

In an example, the neural network 111 for determining a lesion may be a multilayer convolutional neural network which includes a high-level feature generating layer generating a high-level feature, a middle feature generating layer generating a middle-level feature, and a low feature generating layer generating a low-level feature. In this case, the feature extraction module 131 may extract features generated from any one layer of the high-level feature generating layer, the middle feature generating layer, and the low feature generating layer.

The feature map generation module 132 may incorporate features corresponding to each of a plurality of patches forming an image for training to generate a feature map corresponding to the image for training. For example, a pathological slide 10 for training is segmented into a x row and a y column to form each patch. If a feature per patch is a z dimension, the feature map 132 may generate a feature map of a x*y*z dimension, and a relative position among the incorporated features may be the same as a relative position among patches corresponding thereto, respectively.

The labeling module 133 may label the feature map corresponding to the image for training with a severity label of the image for training.

The training module 134 may input the feature map corresponding to the image for training to the neural network 112 for determining severity and may learn the neural network 112 for determining severity. In the case that one feature map labeled with severity of the disease is inputted to the neural network 112 for determining severity, the neural network 112 for determining severity may generate a determination result thereof. A difference between a generated determination result and a label of the inputted feature applies to the neural network 112 for determining severity in an error back-propagating way, the neural network 112 for determining severity may be learned.

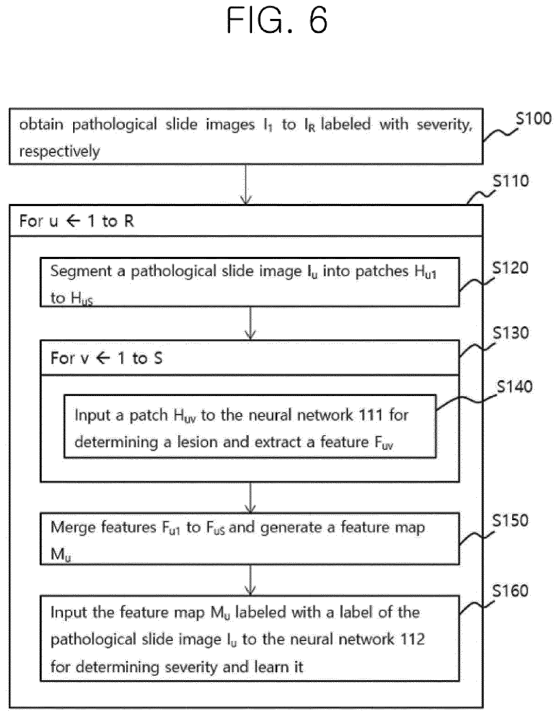

FIG. 6 is a flow chart illustrating an example of a training method of a neural network for determining severity according to an example of the present disclosure.

Referring to FIG. 6, a neural network training system 100 for determining severity may obtain R pathological slide images I₁ to I_{R}(R is an integer of 2 or more) labeled with severity, respectively(S100).

The neural network training system 100 for determining severity may perform the following process, for each u which is from 1 to R.

The neural network training system 100 for determining severity may segment a u^{th} pathological slide image Iᵤ into S patches Hᵤ₁ to H_{uS} (R is an integer of 2 or more) (S120). As described above, each patch Hᵤ₁ to H_{uS} may be an image segmented in an image size which may be received by the neural network 111 for determining a lesion.

The neural network training system 100 for determining severity may input each patch Hᵤ₁ to H_{uS} segmented in the neural network 111 for determining a lesion and may extract features Fᵤ₁ to F_{uS} corresponding thereto (S130, S140) .

Thereafter, the neural network training system 100 for determining severity may incorporate features Fᵤ₁ to F_{uS} and generate a feature map Mᵤ(S150), may input the feature map Mᵤ labeled with a label of a pathological slide image Iᵤ to the neural network 112 for determining severity and may learn it.

In a neural network training method according to the technical spirit of the present disclosure, if a patch is inputted, it may learn the neural network for determining severity based on features generated from a pre-trained neural network for determining a lesion to output a determination result about whether a lesion due to a certain disease is present in the inputted patch. However, features generated in a process that the neural network for determining a lesion generates a determination result about a patch reflect abstract features of the relevant patch well, and thus it may be expected that performance of the neural network for determining a lesion learned by them is improved.

Meanwhile, the neural network 112 for determining severity where training is completed may apply to a severity determination system of a slide unit. The severity determination system may be a diagnosis support device which outputs a prediction result which is helpful for a doctor to determine severity of a disease.

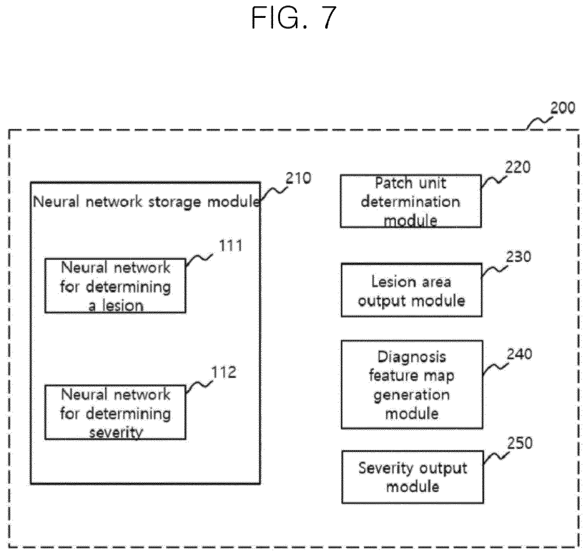

FIG. 7 is a view illustrating schematic configurations of a determination system 200 including the neural network 112 for determining severity where training is completed.

Referring to FIG. 7, a determination system 200 using the neural network for determining severity may include a neural network storage module 210, a patch unit determination module 220, a diagnosis feature map generation module 240, and a severity output module 250.

The neural network storage module 210 may store the neural network 112 for determining severity learned by the neural network training method for determining severity. Also, the neural network storage module 310 may further include the neural network 111 for determining a lesion used in the neural network training method for determining severity. The storage module 210 may be a storage means which may store various information and data including the neural network.

The patch unit determination module 220 may input each of a plurality of diagnosis patches into which a given determination target image is segmented to the neural network 111 for determining a lesion and may obtain a determination result corresponding to each of the plurality of diagnosis patches.

The diagnosis feature map generation module 240 may incorporate features corresponding to each patch generated in a process that the neural network 111 for determining a lesion performs a determination about each of the plurality of diagnosis patches and may generate a feature map. The generated feature map may be inputted to the neural network 112 for determining severity.

The severity output module 250 may output severity about a disease based on an output of the neural network 112 for determining severity.

Meanwhile, the determination system 200 may be used as a system which receives a pathological slide image and outputs a lesion area. In this case, the determination system 200 may further include a lesion area output module 230. Based on a determination result of each of the plurality of diagnosis patches obtained by the patch unit determination module 220, the lesion area output module 230 may output a lattice map (heat map) of the determination target image. The lattice map may mean a map which may visually distinguish a patch area in the first state from a patch area in the second state.

Meanwhile, as described above, the pre-trained neural network 111 for determining a lesion is used in the neural network training method for determining severity. Hereinafter, a method of training the neural network 111 for determining a lesion is specifically described.

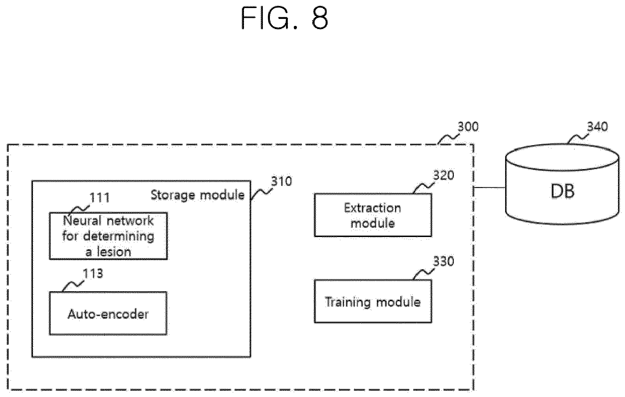

FIG. 8 is a view illustrating schematic configurations of a neural network training system 300 for determining a lesion for performing a method of training a neural network for determining a lesion.

Referring to FIG. 8, the neural network training system 300 for determining a lesion may include a storage module 310, an extraction module 320, and a training module 330.

The storage module 310 may store a neural network 111 for determining a lesion and an auto-encoder 113.

As the above, the neural network 111 for determining a lesion may be a neural network which outputs probabilities about whether the inputted data is in a first state or a second state, thereby being used for binary classification with respect to the inputted data. For example, the neural network 111 for determining a lesion may be a neural network for receiving a biometric image and determining probabilities that there is a lesion which occurs due to a certain disease(e.g., cancer)in the relevant image. That is, the neural network 111 for determining a lesion may output probabilities that a value inputted to the neural network 111 for determining a lesion is in a given first state or second state. The first state may be a normal state(negative) where there is not a lesion, and the second state may be an abnormal state(positive) where there is a lesion.

Probabilities that the neural network 111 for determining a lesion outputs may be a value calculated by a loss function(e.g., a mean squared error(MSE), a cross entropy error(CEE), or a function presenting a distance between two vectors(e.g., a Euclidean distance, a n-norm distance, a Manhattan distance, and the like), etc.) within the neural network 111 for determining a lesion.

The auto-encoder 113 is a neural network structure which is mainly used in an unsupervised training methodology. The auto-encoder 113 is an unsupervised machine training model having a form such that a dimension of inputted values is minimized and then is restored again, wherein it has a function of training features, which values used in training have. More specifically, the auto-encoder 113 is configured to learn a function which makes an output value close to an input value, extract a feature with respect to the input value via the encoder, and reconstruct the input value via a decoder.

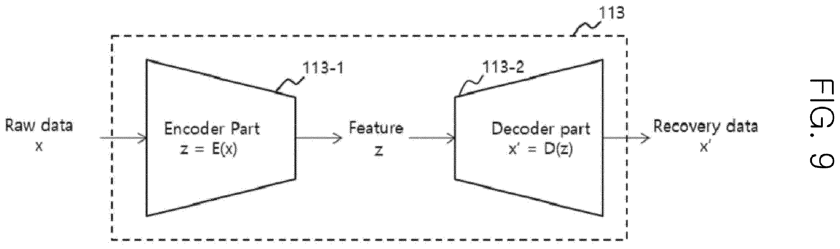

FIG. 9 is a view schematically illustrating a structure of the auto-encoder 113. Referring to FIG. 3, the auto-encoder 113 may include an encoder part 112-1 which includes a convolutional layer, and a decoder part 113-2 which includes a deconvolutional layer. If raw data x is inputted to the encoder 113, encoding is performed with respect to the raw data x in the encoder part(113-1) and thus a feature(z=E(x)) of the raw data x may be generated. The generated z is decoded in the decoder part(113-2), so that recovery data(x'=D(z)) corresponding to the raw data x may be generated.

The auto-encoder is also a type of the neural network, so that training is preceded by many training data, wherein in a training step of the auto-encoder, the following steps 1) to 3) are performed, for each training data d.
1) The training data d is inputted to the auto-encoder 113 and goes through encoding and decoding processes, thereby generating recovery data d' corresponding to the training data d.
2) An error e=L(d, d') which is a difference between the training data d and the recovery data d' is calculated(where L is a loss function).
3) According to an error backpropagation method, a weighted value within the auto-encoder 113 is renewed.

Meanwhile, the auto-encoder 113 may be used for determining whether the inputted value is in the first state or the second state.

In an example, the auto-encoder 113 may be pre-trained only with the training data being in the first state, wherein when a given predicted target value is inputted to the auto-encoder 113, if there is a difference of a given limit value or more between a result value which the auto-encoder 113 restores(i.e., outputs) and the predicted target value, the predicted target value may be determined as being in the second state.

In one of other examples, the auto-encoder 113 may be pre-trained only with the data being in the second state, wherein when the given predicted target value is inputted to the learned auto-encoder 113, if there is a difference of a given limit value or more between a result value which the auto-encoder 113 restores(i.e., outputs) and the predicted target value, the predicted target value may be determined as being in the first state.

Meanwhile, the auto-encoder 113 according to the example may include a Variational AutoEncoder(VAE).

Again, referring to FIG. 9, the DB 340 may store training data to be used in training of the neural network 111 for determining a lesion. The training data may be data for multiple instance training as described with reference to FIG. 1A. That is, each training data stored in the DB(340) may a data bag including many data instances.

In an example, each of a plurality of training data may be a pathological whole-slide-image, and a data instance forming each training data may be each image patch into which the pathological whole-slide-image is segmented in a certain size. In this case, the data bag becomes one intact pathological slide image, the data instance included in the data bag may be an individual patch into which the pathological slide image is segmented in a certain size.

Meanwhile, the training data stored in the DB 340 may be labeled with the first state or the second state, respectively. For example, if the plurality of training data is the pathological slide image, each training data is labeled with a diagnosis result(e.g., whether there is a lesion, etc.) with respect to the pathological slide image.

Meanwhile, according to an example, the training data may not be stored in the DB 340 but may be inputted from a user via an external input means and may be also stored in a form of a file in a storing device such as HDD or SDD.

The extraction module 320 may perform an extracting step of extracting part of data instances included in the data bag as an instance for training, for each of a plurality of data bags labeled with any one of the first state or the second state. The instance for training extracted by the extraction module 320 may be used for training of the neural network 111 for determining a lesion later.

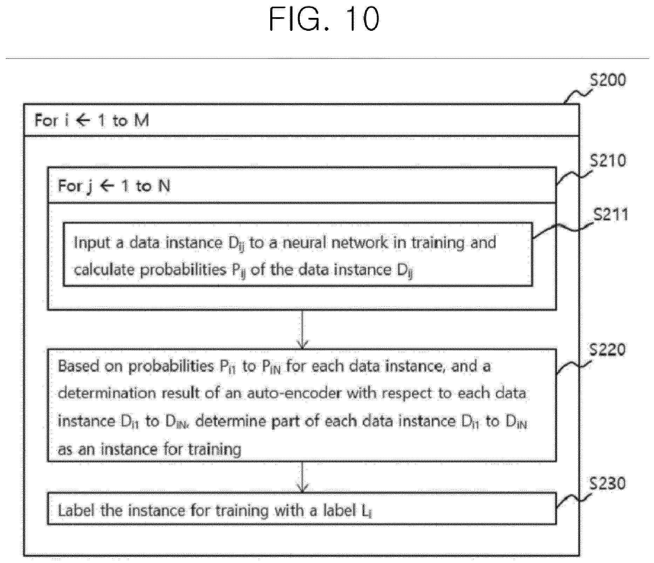

FIG. 10 is a view illustrating an example of a method that the extraction module 320 extracts a data instance for training. FIG. 10 exemplifies the case that data for training is as shown in FIG. 1A.

Referring to FIG. 10, the extraction module 320 may perform steps S210 to S230 for each data bag B₁ to B_{M} in advance(S200) .

Meanwhile, the extraction module 320 may input each data instance Dᵢⱼ included in the data bag Bᵢ to the neural network 111, with respect to the data bag Bᵢ(i is any integer where 1<=i<=M) (j is any integer where 1<=j<=N), and may calculate probabilities Pᵢⱼ of each data instance Dᵢⱼ included in the data bag Bᵢ (S210, S211). For example, Pᵢⱼ may be probabilities to be in the second state, and a Cross-entropy Loss with respect to data instance Dᵢⱼ may be calculated as probabilities Pᵢⱼ.

Thereafter, based on probabilities Pᵢ₁ to P_{iN} for each data instance included in the data bag Bᵢ, and a determination result of the auto-encoder 113 with respect to at least part of each data instance Dᵢ₁ to D_{iN} included in the data bag, the extraction module 320 may determine part of each data instance Dᵢ₁ to D_{iN} included in the data bag Bᵢ as an instance for training(S220) and may label the determined instance for training with a label Lᵢ of Bᵢ (S230).

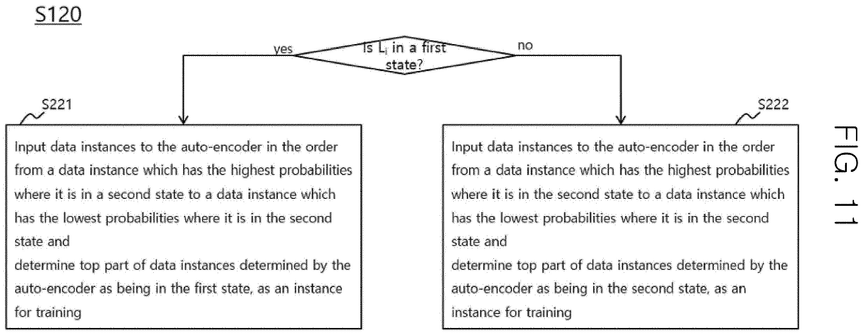

FIG. 11 is a view illustrating an example of a specific process of the step S220 of FIG. 10. In an example of FIG. 11, it is assumed that the auto-encoder 113 is pre-trained only with the data instance which is in the first state(i.e., a normal state).

Referring to FIG. 11, if the data bag is labeled with the first state, the extraction module 320 may input data instances to the auto-encoder 113 in the order from a data instance which has the highest probabilities where it is in the second state to a data instance which has the lowest probabilities where it is in the second state and may determine top part of data instances determined by the auto-encoder as being in the first state, as an instance for training corresponding to the data bag(S221). Here, if a difference between the data instance inputted to the auto-encoder 113 and output data outputted by the auto-encoder 113 is a given limit value or more, the extraction module 320 may determine the data instance inputted to the auto-encoder 113 as being in the first state.

Meanwhile, if the data bag is labeled with the second state, the extraction module 320 may input data instances to the auto-encoder 113 in the order from a data instance which has the highest probabilities where it is in the second state to a data instance which has the lowest probabilities where it is in the second state and may determine top part of data instances determined by the auto-encoder 113 as being in the second state, as an instance for training corresponding to the data bag(S222).

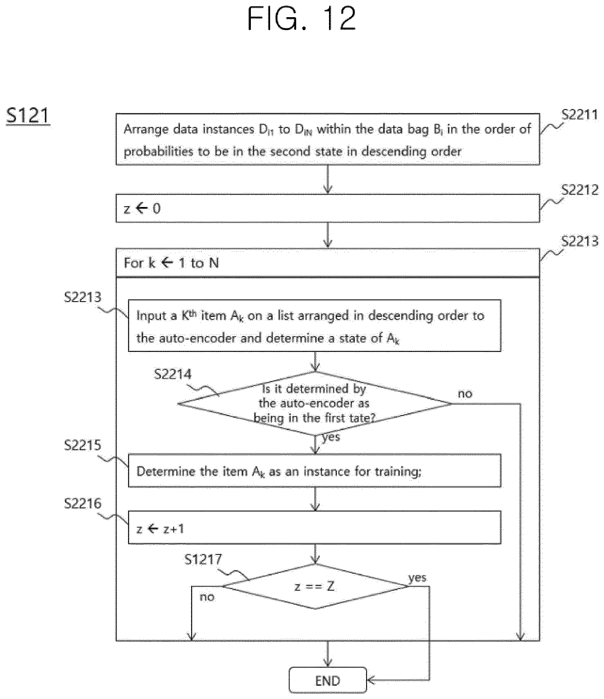

FIG. 12 is a view illustrating an example of a specific process of the step S221 of FIG. 11.

Referring to FIG. 12, the extraction module 320 may arrange data instances Dᵢ₁ to D_{iN} within the data bag Bᵢ in the order of probabilities to be in the second state in descending order(S2211).

The extraction module 320 may input a data instance Aₖ within Bᵢ to the auto-encoder 113 in the arranged order via the step S2211(k is any integer where 1<=j<=N) and may determine a state of the inputted data instance Aₖ(S2213). If the data instance Aₖ is determined as being in the first state, the data instance Aₖ may be determined as an instance for training(S2215).

The extraction module 320 may perform the steps S2213 to S2215 until a loop is completed or an instance for training corresponding to the data bag Bᵢ is found as many as the predetermined number 2(refer to S2212, S2216, and S2217).

Those skilled in the art may easily conceive a specific example of the step S222 of FIG. 10 referring to FIG. 11, so that the detailed description thereof is omitted. Meanwhile, it is natural that FIG. 10 and FIG. 11 are examples implementing the step S220 of FIG. 9, wherein there may be various methods implementing the step S220 of FIG. 9.

Via an extracting process as the above, the extraction module 320 may extract many data instances from one data bag as instances for training. In the conventional multiple instance training method, if many instances for training are extracted from one data bag, there may be high probabilities to extract a wrong training data instance, and thus there may a negative effect on training of the neural network. However, using a method according to the technical spirit of the present disclosure, there is an effect in significantly reducing extraction of the wrong training data instance by using the pre-trained auto-encoder and filtering an instance for training.

Surely, depending on an example, the neural network 111 for determining a lesion may be pre-trained via a neural network training method for determining a lesion to which a multiple instance training technique which does not use the auto-encoder applies.

More specifically, the neural network training method for determining a lesion to which the multiple instance training technique which does not use the auto-encoder applies may include a step of extracting a patch for pre-training which is part of patches forming a pathological slide image for pre-training, for each of a plurality of pathological slide images for pre-training labeled with any one of the first state or the second state, and a step of training the neural network for determining a lesion based on the patch for pre-training corresponding to each of a plurality of images for training. Here, the step of extracting a patch for pre-training which is part of patches forming a pathological slide image for pre-training may include a step of inputting each patch for pre-training forming the pathological slide image for pre-training to the neural network for determining a lesion in training, and calculating probabilities for each patch forming the pathological slide image for pre-training; and a step of determining part of each patch forming the pathological slide image for pre-training as a patch for pre-training based on probabilities for each patch forming the pathological slide image for pre-training. For example, a patch having the largest calculated probabilities of patches forming the pathological slide image for pre-training may be determined as a patch for pre-training.

Again, referring to FIG. 8, the training module 330 may learn the neural network 111 for determining a lesion based on an instance for training extracted by the extraction module 320.

The training module 330 may learn the neural network 111 by back-propagating a loss error between an instance for training inputted to the neural network 111 for determining a lesion and an output value to the neural network 111.

The neural network training method for determining a lesion considers a process of extracting a training data instance performed by the extraction module 320 and a training process performed by the training module 330 as one epoch and repetitively performs the same as many as a plurality of epochs, thereby enhancing performance of the neural network 111.

The above computing device may include a processor and a storage device. The processor may mean an arithmetic device which may drive a program for realizing the technical spirit of the present disclosure and may perform the neural network training method defined by the program and the technical spirit of the present disclosure. The processor may include a single core CPU or a multi-core CPU. The storing device may mean a data storage means which may store a program and various data required for realizing the technical spirit of the present disclosure and may be implemented as a plurality of storage means according to an embodiment. Also, the storing device may have the meaning which includes not only a main memory included in the computing device but also transient storage or a memory, and the like which may be included in the processor. A memory may include a high-speed random access memory and may also include a non-volatile memory such as one or more magnetic disk storage device, flash memory device, or other non-volatile solid state memories. Access to the memory by the processor and other components may be controlled by a memory controller.

Meanwhile, a method according to an example of the present disclosure may be implemented in a form of a program instruction which may be read by a computer and may be stored in a computer-readable recording medium. A control program and a target program according to an example of the present disclosure may be also stored in the computer-readable recording medium. The computer-readable recording medium may include all types of recording devices where data which may be read by a computer system is stored.

The program instruction recorded on the recording medium is one which is specially designed and configured for the present disclosure or one which is known to those skilled in the art of a software field and is usable.

Examples of the computer-readable recording medium include magnetic media such as a hard disk, a floppy disk, and a magnetic tape, optical media such as CD-ROM and DVD, magneto-optical media such as a floptical disk, a hardware device which is specially configured to store and perform program instructions such as ROM, RAM, and a flash memory. Also, the computer-readable recording medium may store and run code which may be distributed on a computer system connected to a network and may be read by a computer in a distributed way.

Examples of the program instruction include not only machine language code made by a compiler but also high-level language code which may be run by a device, which electronically processes information using an interpreter and the like, e.g., a computer.

The above hardware device may be configured to operate as one or more software module for performing an operation of the present disclosure, and vice versa.

The above description of the present disclosure is for examples, and those skilled in the art may understand that the above may be easily changed to other specific variations without changing the technical spirit of the present disclosure or necessary features. Therefore, it is to be understood that the examples described above are exemplary in all aspects and are not limited. For example, each component described as a single type may be implemented to be distributed. In the same way, components described as being distributed may be implemented in a combined form.

The scope of the present disclosure is presented by the scope of patent claims to be described hereinafter more than the above detailed description. All changes or variations conceived from meanings of the scope of patent claims and ranges and concepts of equivalents thereof is to be interpreted as being included in the scope of the present disclosure.

### Industrial Applicability

The present disclosure may be used in a neural network training method and system for determining severity.

## Claims

1. A neural network training system for severity determination, comprising:
a storage module configured to store a neural network for determining a lesion which is a neural network pre-trained to if each patch into which a pathological slide image is segmented in a certain size is inputted, output a determination result about whether there is a lesion due to a certain disease in the inputted patch; and a neural network for determining severity to determine severity of the disease based on the pathological slide image;
a neural network training module for determining severity configured to train the neural network for determining severity based on a given image for training; and
a control module configured to control that the neural network training module for determining severity trains the neural network for determining severity based on the pathological slide image, for each of a plurality pathological slide images which are labeled with severity of the disease, respectively, wherein the neural network training module for determining severity includes:
a feature extraction module configured to extract features generated in a process in which the neural network for determining a lesion receiving the patch outputs a determination result about the patch, for each of a plurality of patches segmented in a unit size;
a feature map generation module configured to generate a feature map corresponding to the image for training, based on features corresponding to each of the plurality of patches forming the image for training;
a labeling module configured to label the feature map corresponding to the image for training with a severity label of the image for training; and
a training module configured to input the feature map corresponding to the image for training to the neural network for determining severity and train the neural network for determining severity.

2. The neural network training system for severity determination of claim 1, wherein the neural network for determining a lesion is pre-trained by a neural network training method for determining a lesion performed by a neural network training system for determining a lesion including an auto-encoder configured to if an image having a unit size is inputted, determine whether the inputted image is in a first state where there is not a lesion due to a disease or a second state where there is a lesion due to the disease, wherein the neural network training method for determining a lesion includes:
a step of, for each of a plurality of pathological slide images for pre-training, extracting a patch for pre-training which is part of patches forming a pathological slide image for pre-training, and
a step of training the neural network for determining a lesion based on the patch for pre-training corresponding to each of a plurality of images for training, wherein the step of extracting the patch for pre-training which is part of patches forming the pathological slide images for pre-training includes:
a step of inputting each patch for pre-training forming the pathological slide image for pre-training to the neural network for determining a lesion in training, and calculating probabilities for each patch forming the pathological slide image for pre-training; and
a step of determining part of each patch forming the pathological slide image for pre-training as a patch for pre-training based on probabilities for each patch forming the pathological slide image for pre-training and a determination result of the auto-encoder with respect to at least part of each patch forming the pathological slide image for pre-training.

3. The neural network training system for severity determination of claim 2, wherein the auto-encoder is pre-trained only with a normal patch which has a unit size and does not include a lesion due to a disease, and the step of determining part of each patch forming the pathological slide image for pre-training as a patch for pre-training based on probabilities for each patch forming the pathological slide image for pre-training and the determination result of the auto-encoder with respect to at least part of each patch forming the pathological slide image for pre-training includes:
a step of if the pathological slide image for pre-training is labeled with the first state, inputting patches to the auto-encoder in the order from a patch which has highest probabilities where it is in the second state to a patch which has lowest probabilities where it is in the second state and determining top part of patches determined by the auto-encoder as being in the first state, as a patch for training corresponding to the image for training; and
a step of if the pathological slide image for pre-training is labeled with the second state, inputting patches to the auto-encoder in the order from a patch which has the highest probabilities where it is in the second state to a patch which has the lowest probabilities where it is in the second state and determining top part of patches determined by the auto-encoder as being in the second state, as a patch for training corresponding to the image for training.

4. The neural network training system for severity determination of claim 1, wherein the neural network for determining a lesion is pre-trained by a neural network training method for determining a lesion performed by a neural network training system for determining a lesion, and the neural network training method for determining a lesion includes:
a step of, for each of a plurality of pathological slide images for pre-training, extracting a patch for pre-training which is part of patches forming a pathological slide image for pre-training, and
a step of training the neural network for determining a lesion based on the patch for pre-training corresponding to each of a plurality of images for training, wherein the step of extracting a patch for pre-training which is part of patches forming the pathological slide image for pre-training includes:
a step of inputting each patch for pre-training forming the pathological slide image for pre-training to the neural network for determining a lesion in training, and calculating probabilities for each patch forming the pathological slide image for pre-training; and
a step of determining part of each patch forming the pathological slide image for pre-training as a patch for pre-training based on probabilities for each patch forming the pathological slide image for pre-training.

5. A neural network training method for determining severity performed in a computing system, comprising:
a neural network for determining a lesion which is a neural network pre-trained to if each patch into which the pathological slide image is segmented in a certain size is inputted, output a determination result about whether there is a lesion due to a certain disease in the inputted patch; and
a neural network for determining severity to determine severity of the disease based on the pathological slide image, wherein the neural network training method for determining severity includes:
a step of obtaining a plurality of pathological slide images labeled with severity of the disease, respectively; and
a step of, for each of a plurality of pathological slide images, training the neural network for determining severity based on the pathological slide image, wherein the step of training the neural network for determining severity based on the pathological slide image includes:
a step of, for each of a plurality of patches into which the pathological slide image is segmented in a unit size, extracting features generated in a process that the neural network for determining a lesion receiving the patch outputs a determination result about the patch;
a step of generating a feature map corresponding to the pathological slide based on the feature corresponding to each of the plurality of patches forming the pathological slide image;
a step of labeling the feature map corresponding to the pathological slide with a severity label of the pathological slide; and
a step of inputting the feature map corresponding to the pathological slide to the neural network for determining severity and training the neural network for determining severity.

6. The neural network training method for determining severity of claim 5, wherein the neural network for determining a lesion is pre-trained by a neural network training method for determining a lesion performed by a neural network training system for determining a lesion including an auto-encoder configured to if an image having a unit size is inputted, determine whether the inputted image is in a first state where there is not a lesion due to a disease or a second state where there is a lesion due to the disease, and the neural network training method for determining a lesion includes:
a step of, for each of a plurality of pathological slide images for pre-training labeled with any one of the first state or the second state, extracting a patch for pre-training which is part of patches forming the pathological slide image for pre-training, and
a step of training the neural network for determining a lesion based on the patch for pre-training corresponding to each of a plurality of images for training, wherein the step of extracting a patch for pre-training which is part of patches forming the pathological slide image for pre-training includes:
a step of inputting each patch for pre-training forming the pathological slide image for pre-training to the neural network for determining a lesion in training, and calculating probabilities for each patch forming the pathological slide image for pre-training; and
a step of determining part of each patch forming the pathological slide image for pre-training as a patch for pre-training based on probabilities for each patch forming the pathological slide image for pre-training and a determination result of the auto-encoder with respect to at least part of each patch forming the pathological slide image for pre-training.

7. The neural network training method for determining severity of claim 6, wherein the auto-encoder is pre-trained only with a normal patch which has a unit size and does not include a lesion due to a disease, and the step of determining part of each patch forming the pathological slide image for pre-training as a patch for pre-training based on probabilities for each patch forming the pathological slide image for pre-training and the determination result of the auto-encoder with respect to at least part of each patch forming the pathological slide image for pre-training includes:
a step of if the pathological slide image for pre-training is labeled with the first state, inputting patches to the auto-encoder in the order from a patch which has highest probabilities where it is in the second state to a patch which has lowest probabilities where it is in the second state and determining top part of patches determined by the auto-encoder as being in the first state, as a patch for training corresponding to the image for training; and
a step of if the pathological slide image for pre-training is labeled with the second state, inputting patches to the auto-encoder in the order from a patch which has the highest probabilities where it is in the second state to a patch which has the lowest probabilities where it is in the second state and determining top part of patches determined by the auto-encoder as being in the second state, as a patch for training corresponding to the image for training.

8. The neural network training method for determining severity of claim 5, wherein the neural network for determining a lesion is pre-trained by a neural network training method for determining a lesion performed by a neural network training system for determining a lesion, and the neural network training method for determining a lesion includes:
a step of, for each of a plurality of pathological slide images for pre-training, extracting a patch for pre-training which is part of patches forming the pathological slide image for pre-training, and
a step of training the neural network for determining a lesion based on the patch for pre-training corresponding to each of a plurality of images for training, wherein the step of extracting a patch for pre-training which is part of patches forming the pathological slide image for pre-training includes:
a step of inputting each patch for pre-training forming the pathological slide image for pre-training to the neural network for determining a lesion in training, and calculating probabilities for each patch forming the pathological slide image for pre-training; and
a step of determining part of each patch forming the pathological slide image for pre-training as a patch for pre-training based on probabilities for each patch forming the pathological slide image for pre-training.

9. A computer program installed in a data processing device and recorded on a medium for performing the method described in any of claims 5 to 8.

10. A computer readable recording medium on which a computer program for performing the method described in any of claims 5 to 8 is recorded.

11. A computing system, comprising: a processor and a memory, wherein if the memory is performed by the processor, it makes the computing system perform the method described in any of claims 5 to 8.

12. A severity diagnosis system using a neural network, comprising:
a neural network for determining a lesion described in claim 5;
a neural network storage module configured to store a neural network for determining severity learned by a neural network training method for determining severity described in claim 5;
a diagnosis feature extraction module configured to extract features generated in a process that the neural network for determining a lesion receiving a diagnosis patch outputs a determination result about the diagnosis patch, for each of a plurality of diagnosis patches into which a determination target pathological slide image is segmented; and
a severity output module configured to input a feature map generated based on a feature corresponding to each of the plurality of diagnosis patches forming the determination target pathological slide image to the neural network for determining severity and output a diagnosis result by the neural network for determining severity.

13. The severity diagnosis system of claim 12, further comprising: a lesion area output module configured to output a heat map of a determination target image, based on the determination result of each of the plurality of diagnosis patches obtained by the neural network for determining a lesion receiving a plurality diagnosis patches.
